# EUROPÄISCHE PATENTANMELDUNG

(11) **EP 4 704 355 A1**
(43) Veröffentlichungstag der Anmeldung: **04.03.2026**
(21) Anmeldenummer: 24197204.1
(22) Anmeldetag: 29.08.2024
(51) Int. Cl.: H04B 10/114, H04B 10/116

(54) **VERFAHREN ZUM ÜBERMITTELN VON DATEN EINES FUNKTIONSGERÄTS MITTELS EINES LICHTSIGNALS AN EIN MOBILES AUSWERTEGERÄT**

(71) Anmelder: Siemens Aktiengesellschaft, 80333 München (DE)
(72) Erfinder: Spandl, Manfred, 1180 Wien (AT); Hofmann, Andreas, 1140 Wien (AT)
(74) Vertreter: Siemens Patent Attorneys

(57) **Zusammenfassung**

Die Erfindung betrifft ein Verfahren zum Übermitteln von Daten (56) eines Funktionsgeräts (12) mittels eines Lichtsignals an ein mobiles Auswertegerät (14), wobei ein Betriebszustand des Funktionsgeräts (12) abhängig vom Steuersignal durch Abgeben von sichtbarem Licht (20) mittels einer Signalleuchte (16) visuell erfassbar signalisiert wird, wobei das Steuersignal gemäß einem vorgegebenen Modulationsverfahren (48) moduliert wird, wobei das abgegebene Licht von einer Lichterfassungseinheit (22) des Auswertegeräts (14) erfasst wird, die Lichtsensorelemente (24) aufweist, die in Zeilen (26) und Spalten (28) angeordnet sind, wobei erfasste Lichtwerte der Lichtsensorelemente zeilenweise aufeinanderfolgend oder spaltenweise aufeinanderfolgend ausgelesen werden, wobei Lichtwerte vom Auswertegerät ausgewertet werden, um die übermittelten Daten zu bestimmen. Erfindungsgemäß wird ein Frequenzumtastverfahren mit mehreren Modulationsfrequenzen (f0, f1, f2, f3) genutzt, wobei bei den zeilenweise ausgelesenen Lichtwerten (80) Lichtwertdaten zu den Lichtwerten von wenigstens einer Spalte als Auswertespalte (74) durch das Auswertegerät ausgewertet werden, um wenigstens eine der Modulationsfrequenzen zu ermitteln.

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein Verfahren zum Übermitteln von Daten eines Funktionsgeräts mittels eines Lichtsignals an ein mobiles Auswertegerät, wobei das Funktionsgerät ein Steuersignal für eine Signalleuchte des Funktionsgeräts bereitstellt, wobei ein Betriebszustand des Funktionsgeräts abhängig vom Steuersignal durch Abgeben von sichtbarem Licht visuell erfassbar signalisiert wird, wobei das Steuersignal entsprechend den zu übermittelnden Daten gemäß einem vorgegebenen Modulationsverfahren moduliert wird, sodass das Lichtsignal zusammen mit dem den Betriebszustand signalisierenden Licht durch die Signalleuchte abgegeben wird, wobei das von der Signalleuchte abgegebene Licht von einer pixelbasierten digitalen Lichterfassungseinheit des Auswertegeräts erfasst wird, wobei die Lichterfassungseinheit Lichtsensorelemente aufweist, die in Zeilen und Spalten angeordnet sind, wobei erfasste Lichtwerte der Lichtsensorelemente zeilenweise aufeinanderfolgend oder spaltenweise aufeinanderfolgend ausgelesen werden, wobei von den Lichtsensorelementen erfasste Lichtwerte vom Auswertegerät ausgewertet werden, um die übermittelten Daten zu bestimmen, wobei die von den Lichtsensorelementen erfassten Lichtwerte entlang einer jeweiligen Zeile oder Spalte der Lichterfassungseinheit innerhalb eines jeweiligen Auslesezeitraums ausgelesen werden, der kleiner als eine halbe Periodendauer einer größten in dem vorgegebenen Modulationsverfahren genutzten Modulationsfrequenz ist. Die Erfindung betrifft ferner ein System zum Übermitteln von Daten eines Funktionsgeräts des Systems mittels eines Lichtsignals an ein mobiles Auswertegerät des Systems, wobei das Funktionsgerät ausgebildet ist, ein Steuersignal für eine Signalleuchte des Funktionsgeräts bereitzustellen, um einen Betriebszustand des Funktionsgeräts abhängig vom Steuersignal durch Abgeben von sichtbarem Licht visuell erfassbar zu signalisieren, wobei das Funktionsgerät ferner ausgebildet ist, das Steuersignal entsprechend den zu übermittelnden Daten gemäß einem vorgegebenen Modulationsverfahren zu modulieren, um das Lichtsignal zusammen mit dem den Betriebszustand signalisierenden Licht durch die Signalleuchte abzugeben, wobei das Auswertegerät eine pixelbasierte digitale Lichterfassungseinheit zum Erfassen des von der Signalleuchte abgegebenen Lichts aufweist, wobei die Lichterfassungseinheit Lichtsensorelemente aufweist, die in Zeilen und Spalten angeordnet sind, wobei das Auswertegerät ausgebildet ist, von den Lichtsensorelementen erfasste Lichtwerte zeilenweise aufeinanderfolgend oder spaltenweise aufeinanderfolgend auszulesen und die von den Lichtsensorelementen erfassten Lichtwerte auszuwerten, um die übermittelten Daten zu bestimmen, wobei das Auswertegerät ferner ausgebildet ist, die von den Lichtsensorelementen erfassten Lichtwerte entlang einer jeweiligen Zeile oder Spalte der Lichterfassungseinheit innerhalb eines jeweiligen Auslesezeitraums auszulesen, der kleiner als eine halbe Periodendauer einer größten in dem vorgegebenen Modulationsverfahren genutzten Modulationsfrequenz ist. Weiterhin betrifft die Erfindung auch ein Funktionsgerät des Systems. Schließlich betrifft die Erfindung auch ein Auswertegerät des Systems.

Gattungsgemäße Verfahren, Systeme, Funktionsgeräte sowie Auswertegeräte sind im Stand der Technik umfänglich bekannt. Solche Verfahren und Systeme dienen dazu, neben der Funktion der Signalleuchte des Funktionsgeräts als visuell erfassbare Betriebsanzeige zusätzliche Informationen vom Funktionsgerät auf einfache Weise erhalten zu können, ohne dass eine ergänzende Hardware erforderlich wäre, mittels der zum Beispiel ein Kommunikationsnetzwerk zum Datenaustausch angeschlossen und genutzt werden kann. In der Regel hat das Funktionsgerät wenigstens eine Signalleuchte, die dazu dient, zum Beispiel eine optische Statusanzeige beziehungsweise eine Betriebsanzeige für einen Nutzer visuell wahrnehmbar darzustellen. Eine solche Signalleuchte kann zum Beispiel eine Leuchtdiode, eine SLD oder eine andere geeignete Leuchte mit einem Leuchtmittel sein, mittels dem die gewünschte Funktion realisierbar ist. Zum Steuern der Signalleuchte nutzt das Funktionsgerät ein Steuersignal, welches von einer Steuereinheit des Funktionsgeräts, beispielsweise einer programmgesteuerten Rechnereinheit oder dergleichen, bereitgestellt werden kann. Mit der Signalleuchte kann zum Beispiel angezeigt werden, dass das Funktionsgerät für eine Aufnahme oder Durchführung einer bestimmungsgemäßen Funktion aktiviert oder betriebsbereit ist.

Funktionsgeräte der gattungsgemäßen Art sind ebenfalls umfänglich bekannt und werden in technischen Einrichtungen, beispielsweise Fertigungsstraßen, besonders im Bereich von Automationskomponenten in elektrischen Anlagen, häufig eingesetzt. Das Funktionsgerät kann zum Beispiel ein Steuergerät für eine speicherprogrammierbare Steuerung, ein Netzteil, ein Netzwerkgerät und/oder dergleichen sein.

Ein hoher Grad an Leistungsfähigkeit und Komplexität führt zu einem entsprechenden Bedarf an Überprüfung und Wartung. Obwohl eine Vielzahl von Funktionsgeräten bereits eine Fernwartung und/oder eine Ferndiagnose unterstützt, sind insbesondere einfachere Funktionsgeräte, beispielsweise Netzteile, bei einer solchen Funktionalität in der Regel nicht integriert. Gleichwohl können derartige Funktionsgeräte für die Funktion eines Gesamtsystems wichtig, insbesondere kritisch, sein. Es besteht daher ein Bedarf, auch für derartige Funktionsgeräte eine Kommunikationsmöglichkeit zu schaffen. Dies soll jedoch mit möglichst wenig zusätzlichem Aufwand erreicht werden können. Dabei soll insbesondere ein Hardwareaufwand möglichst gering sein, vorzugsweise kein zusätzlicher Hardwareaufwand erforderlich sein.

Um bei den letztgenannten Funktionsgeräten ebenfalls die Überprüfung beziehungsweise Wartung verbessern zu können, schlägt zum Beispiel die EP 4 231 547 A1 vor, eine digitale Schnittstelle für das Funktionsgerät zu schaffen, welche es unter Nutzung der Signalleuchte neben der für den Nutzer sichtbar bereitgestellten Visualisierung des Betriebszustands des Funktionsgeräts zusätzlich erlaubt, Daten vom Funktionsgerät an ein mobiles Auswertegerät zu übermitteln. Das für die Signalisierung genutzte Lichtsignal der Signalleuchte wird danach nicht nur als visuell wahrnehmbare Betriebsanzeige sondern unter Nutzung eines Modulationsverfahrens ergänzend einer zusätzlichen Nutzung genutzt, nämlich dem Übermitteln von Daten. Für die Realisierung dieser Funktionalität steht daher lediglich das Steuersignal für die Signalleuchte zur Verfügung. Das Steuersignal wird somit entsprechend den zu übermittelnden Daten gemäß einem vorgegebenen Modulationsverfahren moduliert. Mittels des vorgegebenen Modulationsverfahrens wird somit die ergänzende Funktionalität eingeführt, die über die mit dem Steuersignal übliche optische beziehungsweise visuelle Signalisierung hinausgeht.

Um darüber hinaus die auf die zuvor erläuterte Weise mittels des Lichtsignals übermittelten Daten empfangen zu können, ist das mobile Auswertegerät vorgesehen. Das mobile Auswertegerät ermöglicht es, das von der Signalleuchte abgegebene Licht mittels einer pixelbasierten digitalen Lichterfassungseinheit des Auswertegeräts zu erfassen. Das Auswertegerät ist daher vorzugsweise ein tragbares Gerät, was ein entsprechender Nutzer leicht mitzuführen vermag. Beispielsweise kann das mobile Auswertegerät ein tragbares Funktionsgerät, insbesondere ein Mobilfunkendgerät, vorzugsweise ein Smartphone, oder dergleichen sein. Das Auswertegerät verfügt über die Lichterfassungseinheit, die zum Beispiel eine digitale Kamera oder dergleichen sein kann. Die Lichterfassungseinheit hat Sensorelemente, die in Zeilen und Spalten angeordnet sind, beispielsweise wie bei einer Digitalkamera oder dergleichen. Erfasste Lichtwerte der Sensorelemente werden zeilenweise aufeinanderfolgend oder spaltenweise aufeinanderfolgend ausgelesen. Die erfassten Lichtwerte werden vom Auswertegerät ausgewertet, um die übermittelten Daten zu bestimmen. Dadurch stehen die übermittelten Daten im Auswertegerät für die weitere Nutzung zur Verfügung.

Die zu übermittelnden Daten können beispielsweise weitere Betriebszustände des Funktionsgeräts, Störungsmeldungen, Parametereinstellungen und/oder dergleichen umfassen. In der Lichterfassungseinheit sind die Lichtsensorelemente vorzugsweise nach Art eines Rasters angeordnet. Die von den Lichtsensorelementen erfassten Lichtwerte werden entlang einer jeweiligen Zeile beziehungsweise Spalte der Lichterfassungseinheit innerhalb eines jeweiligen Auslesezeitraums ausgelesen, der kleiner als eine halbe Periodendauer einer größten der in dem vorgegebenen Modulationsverfahren genutzten Modulationsfrequenz ist. Dadurch kann die zuverlässige Datenübertragung realisiert werden. Insbesondere ermöglicht es diese optische Datenübertragung, dass eine Standardkamera eines Nutzerendgeräts beispielsweise des Mobilfunkendgeräts, insbesondere des Smartphones, die erforderliche pixelbasierte digitale Lichterfassungseinheit bereitstellt. Bei einer derartigen Kamera beziehungsweise Lichterfassungseinheit kann dann ein sogenannter "Rolling-Shutter-Effekt" aufgrund des zeilenweise beziehungsweise spaltenweisen Auslesens der von den Lichtsensorelementen erfassten Lichtwerte genutzt werden, um geeignete Abtastraten zu realisieren, die deutlich über einer Frequenz von aufeinanderfolgenden Bildern in einem Videodatenstrom der Kamera sind.

Es hat sich jedoch gezeigt, dass die Nutzung der vorbeschriebenen Technologie eine Eignung der Geräte erfordert, und zwar insbesondere des Funktionsgeräts zur Bereitstellung des Lichtsignals. Die EP 4 231 547 A1 liefert hierzu keine Angaben. So kann der Fall eintreten, dass zum Beispiel das Funktionsgerät aufgrund seiner Konstruktion nicht für die Nutzung aller Modulationsfrequenzen geeignet ist. Eine zuverlässige Kommunikation kann dann nicht erreicht werden.

Der Erfindung liegt die Aufgabe zugrunde, ein Verfahren, ein System, ein Funktionsgerät sowie ein Auswertegerät dahingehend zu verbessern, dass das zuverlässige Übermitteln der Daten verifiziert werden kann.

Als Lösung werden mit der Erfindung ein Verfahren, ein System, ein Funktionsgerät sowie ein Auswertegerät gemäß den unabhängigen Ansprüchen vorgeschlagen.

Vorteilhafte Weiterbildungen ergeben sich durch Merkmale der abhängigen Ansprüche.

In Bezug auf ein gattungsgemäßes Verfahren wird mit der Erfindung insbesondere vorgeschlagen, dass als vorgegebenes Modulationsverfahren ein Frequenzumtastverfahren mit mehreren Modulationsfrequenzen genutzt wird, wobei die erfassten Lichtwerte der Lichtsensorelemente aller Zeilen beziehungsweise aller Spalten in wenigstens einem Auslesezyklus genau einmal ausgelesen werden, um einen Bilddatensatz mit einer den Lichtsensorelementen entsprechenden Anzahl an Bildpixeln zu bilden, wobei jedem Bildpixel Lichtwertdaten von jeweils genau einem jeweiligen Lichtsensorelement zugeordnet werden, wobei bei den zeilenweise ausgelesenen Lichtwerten Lichtwertdaten zu den Lichtwerten von wenigstens einer Spalte als Auswertespalte durch das Auswertegerät ausgewertet werden, um wenigstens eine der Modulationsfrequenzen zu ermitteln, oder wobei bei den spaltenweise ausgelesenen Lichtwerten Lichtwertdaten zu den Lichtwerten von wenigstens einer Zeile als Auswertezeile durch das Auswertegerät ausgewertet werden, um wenigstens eine der Modulationsfrequenzen zu ermitteln.

In Bezug auf ein gattungsgemäßes System wird mit der Erfindung insbesondere vorgeschlagen, dass das Funktionsgerät einen Frequenzumtastmodulator und das Auswertegerät einen Frequenzumtastdemodulator aufweist, die ausgebildet sind, als vorgegebenes Modulationsverfahren ein Frequenzumtastverfahren mit mehreren Modulationsfrequenzen zu nutzen, wobei das Auswertegerät ferner ausgebildet ist, die erfassten Lichtwerte der Lichtsensorelemente aller Zeilen beziehungsweise aller Spalten in wenigstens einem Auslesezyklus genau einmal auszulesen, um einen Bilddatensatz mit einer den Lichtsensorelementen entsprechenden Anzahl an Bildpixeln zu bilden, wobei das Auswertegerät ausgebildet ist, jedem Bildpixel Lichtwertdaten von jeweils genau einem jeweiligen Lichtsensorelement zuzuordnen, wobei das Auswertegerät ausgebildet ist, bei den zeilenweise ausgelesenen Lichtwerten Lichtwertdaten zu den Lichtwerten von wenigstens einer Spalte als Auswertespalte durch das Auswertegerät auszuwerten, um wenigstens eine der Modulationsfrequenzen zu ermitteln, oder bei den spaltenweise ausgelesenen Lichtwerten Lichtwertdaten zu den Lichtwerten von wenigstens einer Zeile als Auswertezeile durch das Auswertegerät auszuwerten, um wenigstens eine der Modulationsfrequenzen zu ermitteln.

In Bezug auf ein gattungsgemäßes Funktionsgerät wird mit der Erfindung vorgeschlagen, dass das Funktionsgerät gemäß der Erfindung ausgebildet ist.

In Bezug auf ein gattungsgemäßes Auswertegerät wird mit der Erfindung insbesondere vorgeschlagen, dass das Auswertegerät gemäß der Erfindung ausgebildet ist.

Die Erfindung basiert unter anderem auf dem Gedanken, dass es möglich ist, mit einfachen Mitteln zu testen, ob sich das Funktionsgerät eignet, das vorgegebene Modulationsverfahren zu nutzen. Dies kann zum Beispiel dadurch erreicht werden, dass das Funktionsgerät eingerichtet wird, das vorgegebene Modulationsverfahren durchzuführen und die von der Signalleuchte abgegebenen Lichtsignale auswertet. Können nämlich die vom vorgegebenen Modulationsverfahren genutzten Modulationsfrequenzen mittels des Auswertegeräts verifiziert werden, kann festgestellt werden, dass sich das Funktionsgerät für die Nutzung des vorgegebenen Modulationsverfahrens eignet. Zu diesem Zweck kann eine bestimmte Auswertung der von der Lichterfassungseinheit erfassten Lichtwerte vorgesehen sein, bei der das Auswertegerät die erfassten Lichtwerte der Lichtsensorelemente aller Zeilen beziehungsweise aller Spalten in wenigstens einem Auslesezyklus genau einmal ausliest, um einen Bilddatensatz mit einer den Lichtsensorelementen entsprechenden Anzahl an Bildpixeln zu bilden. Der Bilddatensatz enthält demnach vorzugsweise entweder die Lichtwertdaten zu den zeilenweise ausgelesenen Lichtsensorelementen oder die Lichtwertdaten zu den spaltenweise ausgelesenen Lichtsensorelementen. In einem folgenden Auslesezyklus können die Lichtwerte erneut entsprechend ausgelesen werden, um einen weiteren Bilddatensatz bereitzustellen. Das kann dem Grunde nach beliebig weitergeführt werden. Die Modulationsfrequenzen sind vorzugsweise derart gewählt, dass die abhängig hiervon erzeugten Lichtsignale im von der Signalleuchte abgegebenen Licht von einem Nutzer nicht visuell wahrgenommen werden. Beispielsweise können die Modulationsfrequenzen größer als 1,2 kHz gewählt sein. Vorzugsweise sind die Modulationsfrequenzen jedoch kleiner als 5 kHz.

Die weitere Funktion wird vorzugsweise basierend auf wenigstens einem Bilddatensatz fortgeführt, indem jedem Bildpixel Lichtwertdaten von jeweils genau einem jeweiligen Lichtsensorelement zugeordnet werden. Wurden die Lichtwerte zeilenweise ausgelesen, werden diesen Lichtwertdaten zugeordnet. Die Lichtwertdaten zu den Lichtwerten von wenigstens einer Spalte, die eine jeweilige Auswertespalte bildet, werden ausgewertet, um wenigstens eine der Modulationsfrequenzen zu ermitteln. Das Auswerten kann zum Beispiel berücksichtigen, dass Helligkeitswerte der Lichtwerte abhängig von der jeweiligen Modulationsfrequenz variieren. Dadurch ist es möglich, die zuverlässige Nutzbarkeit der jeweiligen Modulationsfrequenz festzustellen. Vorzugsweise werden alle genutzten Modulationsfrequenzen ermittelt.

Dem Grunde nach kann dies entsprechend auch für spaltenweise ausgelesene Lichtwerte realisiert werden. Wurden die Lichtwerte spaltenweise ausgelesen, werden diesen ebenfalls Lichtwertdaten zugeordnet. Die Lichtwertdaten zu den Lichtwerten von wenigstens einer Zeile, die eine jeweilige Auswertezeile bildet, werden ausgewertet, um wenigstens eine der Modulationsfrequenzen zu ermitteln. Das weitere Verfahren entspricht dem zuvor erläuterten.

Vorzugsweise umfasst die Auswertespalte genau eine Spalte. Entsprechend umfasst die Auswertezeile vorzugsweise genau eine Zeile. In alternativen Ausgestaltungen kann jedoch auch vorgesehen sein, dass die Auswertespalte zwei oder mehr Spalten beziehungsweise die Auswertezeile zwei oder mehr Zeilen umfasst.

Als vorgegebenes Modulationsverfahren wird ein Frequenzumtastverfahren genutzt. Das Frequenzumtastverfahren hat sich für die Anwendung der Erfindung als besonders vorteilhaft und leicht umsetzbar herausgestellt. Zugleich kann mit dem Frequenzumtastverfahren eine große Zuverlässigkeit und/oder Störfestigkeit in Bezug auf das Übermitteln der Daten erreicht werden. Das Frequenzumtastverfahren ermöglicht darüber hinaus, eine vergleichsweise große Datenrate zu erreichen, sodass auch ein größeres Datenvolumen innerhalb eines angemessenen Zeitraums vom Funktionsgerät an das Auswertegerät übermittelt werden kann.

Das Frequenzumtastverfahren nutzt vorzugsweise wenigstens zwei voneinander verschiedene Modulationsfrequenzen. Es können aber auch mehr als zwei Modulationsfrequenzen vorgesehen sein, beispielsweise drei Modulationsfrequenzen, vier Modulationsfrequenzen oder sogar noch mehr Modulationsfrequenzen. Die Modulationsfrequenzen können zum Beispiel einen äquidistanten Frequenzabstand zueinander aufweisen.

Besonders vorteilhaft sind die Daten binäre digitale Daten. Dadurch kann eine einfache Datenverarbeitung und/oder Signalverarbeitung erreicht werden. Besonders vorteilhaft lässt sich diese Weiterbildung mit dem Frequenzumtastverfahren kombinieren. Es kann beispielsweise vorgesehen sein, dass das Funktionsgerät das Lichtsignal entsprechend einer vorgegebenen Datenfolge abgibt.

Die Erfindung ist natürlich nicht nur darauf beschränkt, dass die Signalleuchte das Licht kontinuierlich abgibt. Die Erfindung ist gleichermaßen auch dann anwendbar, wenn die Signalleuchte das Licht nur zeitweise abgibt oder beispielsweise in einem Taktbetrieb betrieben wird, beispielsweise um ein Blinken visuell erfassbar zu signalisieren. Es versteht sich, dass das Übermitteln der Daten mittels des Lichtsignals nur dann erfolgt, wenn die Signalleuchte aktuell tatsächlich auch Licht abgibt. Darüber hinaus ist die Erfindung natürlich auch nicht darauf beschränkt, dass die Signalleuchte das Licht immer mit der gleichen Farbe oder mit der gleichen Lichtstärke abgibt. Je nach auszugebendem Betriebszustand kann natürlich die Farbe des durch die Signalleuchte abgegebenen Lichts verändert werden, beispielsweise von einem roten Licht zu einem gelben Licht oder einem grünen Licht oder auch umgekehrt. Für die Funktion der Erfindung ist dies nicht relevant. Darüber hinaus kann natürlich vorgesehen, dass das Funktionsgerät mehr als lediglich eine einzige Signalleuchte aufweist, beispielsweise zwei Signalleuchten, drei Signalleuchten oder dergleichen. In diesem Fall kann vorgesehen sein, dass wenigstens eine der Signalleuchten des Funktionsgeräts dazu genutzt wird, das Lichtsignal entsprechend abzugeben. Es kann aber auch vorgesehen sein, dass zwei oder auch noch mehr Signalleuchten zum Abgeben des Lichtsignals genutzt werden. Vorzugsweise kann vorgesehen sein, dass mehrere Signalleuchten gemeinsam zum Abgeben des Lichtsignals genutzt werden, beispielsweise indem sie synchron betrieben werden. Darüber hinaus ist es ebenfalls möglich, dass mehrere Signalleuchten dazu genutzt werden, parallel unterschiedliche Lichtsignale entsprechend unterschiedlichen zu übermittelnden Daten abgeben.

Insbesondere kann die Erfindung eine Verfügbarkeit eines Videodatenstroms aus einer Digitalkamera basierend auf einer Rolling-Shutter-Technologie nutzen. Aus einem Verhältnis einer Belichtungszeit und einer Sendefrequenz kann sich ein mit der Frequenz abfallender Frequenzgang ergeben. Bei einigen Auswertegeräten kann es daher sinnvoll sein, bei den höchsten verwendeten Frequenz spezielle Methoden für ihre Detektion anzuwenden. Mit der Erfindung kann ein Profil bestehend aus Periodenlängen der einzelnen detektierten Modulationsfrequenzen und eine Methode für die Ermittlung der höchsten Frequenz, das heißt, der kleinsten Periodenlänge, erstellt werden. Bei jeder Nutzung des Auswertegeräts kann dieses Profil verwendet werden. Zu diesem Zweck kann die Digitalkamera des Auswertegeräts wie beim bestimmungsgemäßen Betrieb das vom Funktionsgerät übermittelte Lichtsignal zur Analyse erfassen, das heißt, dass kein spezielles Trainingssignal notwendig zu sein braucht.

Besonders vorteilhaft erweist es sich, wenn die wenigstens eine Signalleuchte von einer programmierbaren Steuereinheit des Funktionsgeräts unmittelbar angesteuert werden kann. Die Erfindung kann auf diese Weise leicht durch Anpassen eines Rechnerprogramms in dem Funktionsgerät realisiert werden. Dadurch eignet sich die Erfindung auch besonders zum Nachrüsten von bereits vorhandenen Funktionsgeräten.

Das Auswertegerät ist vorzugsweise ein tragbares Gerät, was von einem Nutzer mitgeführt werden kann. Das Auswertegerät kann eine Digitalkamera sein, die mit einer Auswerteeinheit verbunden ist. Das Auswertegerät kann aber auch ein Tablet, ein Mobilfunkendgerät, LapTop oder dergleichen sein. Das Auswertegerät weist die pixelbasierte digitale Lichterfassungseinheit auf, die vom Nutzer durch geeignetes Positionieren des Auswertegeräts gegenüber dem Funktionsgerät angeordnet werden kann, sodass die Lichterfassungseinheit das von der Signalleuchte abgegebene Licht zuverlässig zu erfassen vermag. Beispielsweise kann die Lichterfassungseinheit gegenüberliegend zur Signalleuchte angeordnet sein. Das Anordnen kann durch den Nutzer erfolgen, indem er das Auswertegerät geeignet positioniert. Vorzugsweise positioniert der Nutzer das Auswertegerät derart, dass die Lichterfassungseinheit gegenüberliegend zur Signalleuchte angeordnet ist. Ein Abstand zwischen der Signalleuchte und der Lichterfassungseinheit kann dabei wenige Zentimeter oder weniger betragen. Auf diese Weise kann erreicht werden, dass Störungen in Bezug auf das Übermitteln der Daten weitgehend reduziert werden können. Darüber hinaus kann ferner erreicht werden, dass die Datenübermittlung mit geringem technischem Aufwand realisiert werden kann. Besonders vorteilhaft erweist es sich, dass hier insbesondere ein Einhalten von gesetzlichen Vorschriften, Normen und/oder dergleichen mit geringem Aufwand realisiert werden kann. Die Erfindung ermöglicht also eine kostengünstige zuverlässige Kommunikation zwischen dem Funktionsgerät und dem Auswertegerät. Die jeweilige Verfahrensführung kann vorzugsweise durch das Auswertegerät realisiert sein.

Gemäß einer Weiterbildung wird vorgeschlagen, dass ein Frequenzumtastdemodulator des Auswertegeräts abhängig von der wenigstens einen ermittelten Modulationsfrequenz eingestellt wird. Dadurch kann die Signalverarbeitung des Auswertegeräts verbessert werden. Vorzugsweise kann der Frequenzumtastdemodulator automatisiert eingestellt werden. Dadurch ist es möglich, das Auswertegerät ohne manuelle Eingriffe bei unterschiedlichen Funktionsgeräten zu nutzten.

Darüber hinaus wird vorgeschlagen, dass zumindest abhängig von den in der Auswertespalte beziehungsweise der Auswertezeile enthaltenen Lichtwertdaten eine jeweilige Helligkeitsschwingung und ein Referenzwert ermittelt wird, wobei zum Ermitteln der jeweiligen Modulationsfrequenz der Referenzwert von der ermittelten Helligkeitsschwingung subtrahiert wird, um eine normalisierte Schwingung zu erhalten. Die normalisierte Schwingung kann für eine weitere Signalverarbeitung zur Verfügung gestellt werden, um die jeweilige Modulationsschwingung zu ermitteln. Es kann eine Vergleichbarkeit in Bezug auf eine Schwingungsamplitude erreichet werden. Der Referenzwert kann zum Beispiel ein Mittelwert, ein Effektivwert, ein Spitzenwert oder dergleichen sein. Der Referenzwert kann zum Beispiel ein konstanter Wert sein. Der Referenzwert braucht jedoch kein konstanter Wert zu sein, er kann beispielsweise zumindest teilweise zeitlich veränderlich sein. Der Referenzwert kann vorzugsweise anhand von allen in der Auswertespalte beziehungsweise der Auswertezeile enthaltenen Lichtwertdaten ermittelt werden.

Vorzugsweise wird die normalisierte Schwingung mit einem vorgegebenen Lichtvergleichswert verglichen. Der Vergleichswert ist insbesondere derart vorgegeben, dass nur eine normalisierte Schwingung zum Ermitteln der wenigstens einen Modulationsschwingung weiterverarbeitet wird, deren Amplitude größer als der Vergleichswert ist. Der Vergleichswert kann derart gewählt sein, dass eine zuverlässige Kommunikation realisiert werden kann. Insbesondere können normalisierte Schwingungen mit kleinen Amplituden, die in einen Bereich eines Rausch- oder Störsignals fallen können, für die weitere Berücksichtigung ausgeschlossen werden.

Weiterhin wird vorgeschlagen, dass abhängig von dem Vergleichen eine Funktionsbereitschaft durch das Auswertegerät signalisiert wird. Auf diese Weise kann einem Nutzer angezeigt werden, dass die Kommunikation zuverlässig betrieben werden kann. Das Signalisieren kann zum Beispiel mittels eines visuell, akustisch und/oder haptisch erfassbaren Signals realisiert sein. Das Auswertegerät kann hierfür eine geeignete Ausgabeeinheit aufweisen.

Darüber hinaus wird vorgeschlagen, dass ein Teil der Daten zum Modulieren in positiver Logik vom Funktionsgerät bereitgestellt wird. Alternativ oder ergänzend wird vorgeschlagen, dass ein Teil der Daten zum Modulieren in negativer Logik vom Funktionsgerät bereitgestellt wird. Dadurch brauchen die Daten nicht in ein spezifisches Format für die Modulation umgewandelt werden. Vielmehr können die Daten so für das Übermitteln genutzt werden, wie sie vom Funktionsgerät bereitgestellt werden. Eine entsprechende Signalverarbeitung braucht daher nicht vorgesehen zu sein.

Gemäß einer Weiterbildung wird vorgeschlagen, dass aufeinanderfolgende Datenabschnitte der Daten vom Funktionsgerät wechselweise in positiver und negativer Logik bereitgestellt werden. Dies hat den Vorteil, dass möglichst viele Modulationsfrequenzen zum Einsatz kommen. Es hat sich gezeigt, dass für die erfindungsgemäße Kommunikation insbesondere die Nutzung der höchsten Modulationsfrequenzen kritisch sein kann. Abhängig von der Folge der Daten können daher möglichst viele Modulationsfrequenzen, vorzugsweise alle Modulationsfrequenzen, im Lichtsignal auftreten. Dadurch kann die Zuverlässigkeit des Testens der Funktionalität weiter verbessert werden.

Ferner wird vorgeschlagen, dass das Funktionsgerät zumindest bei einem Wechsel zwischen einem Datenabschnitt in positiver Logik und einem anschließenden Datenabschnitt in negativer Logik oder einem Wechsel zwischen einem Datenabschnitt in negativer Logik und einem anschließenden Datenabschnitt in positiver Logik eine Wechselbitfolge zwischen den jeweiligen Datenabschnitten einfügt. Das Auswertegerät kann daher auf einfache Weise erkennen, wann zwischen der positiven und der negativen Logik gewechselt wird. Die Wechselbitfolge weist wenigstens ein Bit auf und ist vorzugsweise derart gewählt, dass sie in den zu übermittelnden Daten nicht auftritt.

Weiterhin wird vorgeschlagen, dass die Wechselbitfolge wenigstens ein Initialisierungsbit aufweist. Darüber hinaus können natürlich auch weitere Bits vorgesehen sein, beispielsweise ein Stoppbit, ein Bit, welches die Art der Logik anzeigt, und/oder dergleichen. Dadurch kann die Signalverarbeitung durch das Auswertegerät ermöglicht beziehungsweise verbessert werden.

Darüber hinaus wird vorgeschlagen, dass das Modulationsverfahren an einem Übergang von zwei aufeinanderfolgenden Bits die Modulationsfrequenz von einer ersten Modulationsfrequenz zu einer zweiten Modulationsfrequenz wechselt. Auf diese Weise ist es seitens des Auswertegeräts einfach möglich, zwei aufeinanderfolgende Bits als separate Bits voneinander zu unterscheiden. Darüber hinaus ist es ferner auf einfache Weise möglich, eine Taktrate für das Übertragen der Daten durch die Lichtsignale zu bestimmen. Dies kann für die weitere Signalverarbeitung durch das Auswertegerät vorteilhaft sein.

Es wird ferner vorgeschlagen, dass das Auswertegerät ein Smartphone aufweist. Dadurch ist es auf einfache Weise möglich, eine Vielzahl von kostengünstigen Auswertegeräten zur Verfügung zu stellen und für die Erfindung nutzbar zu machen.

Besonders vorteilhaft erweist es sich, wenn das Auswertegerät ein Smartphone oder Tablet aufweist, insbesondere durch ein Smartphone gebildet ist, wobei das Smartphone beziehungsweise das Tablet eine Kamera als Lichterfassungseinheit aufweist, die die erfassten Lichtwerte in Form von Bilddaten bereitstellt, wobei auf dem Smartphone beziehungsweise dem Tablet eine Anwendung installiert ist, die die von der Kamera bereitgestellten Bilddaten auswertet, um die übermittelten Daten zu bestimmen. Auf diese Weise ist es möglich, ein handelsübliches Smartphone beziehungsweise Tablet als Auswerteeinheit zu ertüchtigen. Natürlich kann diese Weiterbildung ebenso bei einem entsprechend ausgebildeten Tablet oder LapTop, gegebenenfalls unter Nutzung einer Web-Cam, realisiert sein. Vorzugsweise enthalten die Bilddaten Bilddatensätze. Es brauchen daher für die Nutzung der Erfindung keine separaten Auswertegeräte konstruiert zu werden. Vielmehr kann ein handelsübliches Smartphone auf einfache Weise durch Installieren einer App dazu ertüchtigt werden, die Funktionen des Auswertegeräts in Verbindung mit der Kamera als Lichterfassungseinheit zu realisieren.

Die für das erfindungsgemäße Verfahren angegebenen Vorteile und Wirkungen gelten gleichmäßig auch für das erfindungsgemäße System, das erfindungsgemäße Funktionsgerät und die erfindungsgemäße Auswerteeinheit sowie umgekehrt. Insbesondere können daher auch Verfahrensmerkmale als Vorrichtungsmerkmale oder umgekehrt formuliert sein.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale beziehungsweise Funktionen.

Dabei zeigen:
FIG 1 in einer schematischen Blockdarstellung ein System zum Übermitteln von Daten eines Netzteils mittels eines Lichtsignals an ein Smartphone,
FIG 2 in einer schematischen Blockdarstellung einen Ausschnitt des Smartphones gemäß FIG 1 mit einer Kamera zum Erfassen und Demodulieren der Daten,
FIG 3 eine schmatische Signaldarstellung eines von der Kamera bereitgestellten Videodatenstroms,
FIG 4 eine schematische Signaldarstellung für ein 4-FSK-Modulationsverfahren zum Übermitteln der Daten durch das System gemäß FIG 1,
FIG 5 eine schematische Diagrammdarstellung einer Übertragungscharakteristik, welches insbesondere Eigenschaften der Kamera des Smartphones gemäß FIG 2 berücksichtigt, FIG 6 eine schematische Darstellung eines Bildes mit durch die Kamera gemäß FIG 2 erfassten Lichtwerten, die zeilenweise ausgelesen werden,
FIG 7 eine schematische Diagrammdarstellung von durch eine Auslesespalte erfassten Lichtwerten des Bildes gemäß FIG 2, und
FIG 8 eine schematische Diagrammdarstellung der um einen Referenzwert korrigierten Lichtwerte gemäß FIG 7.

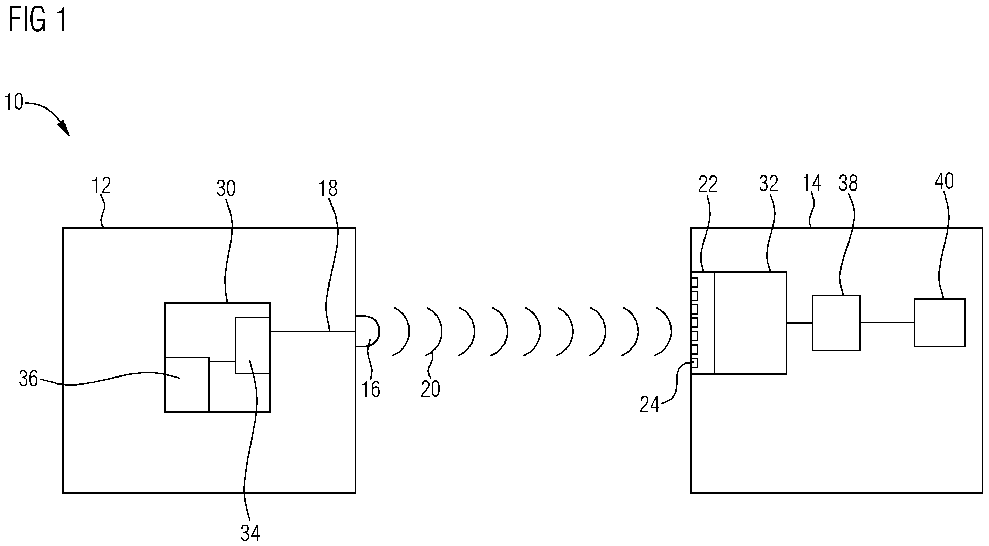

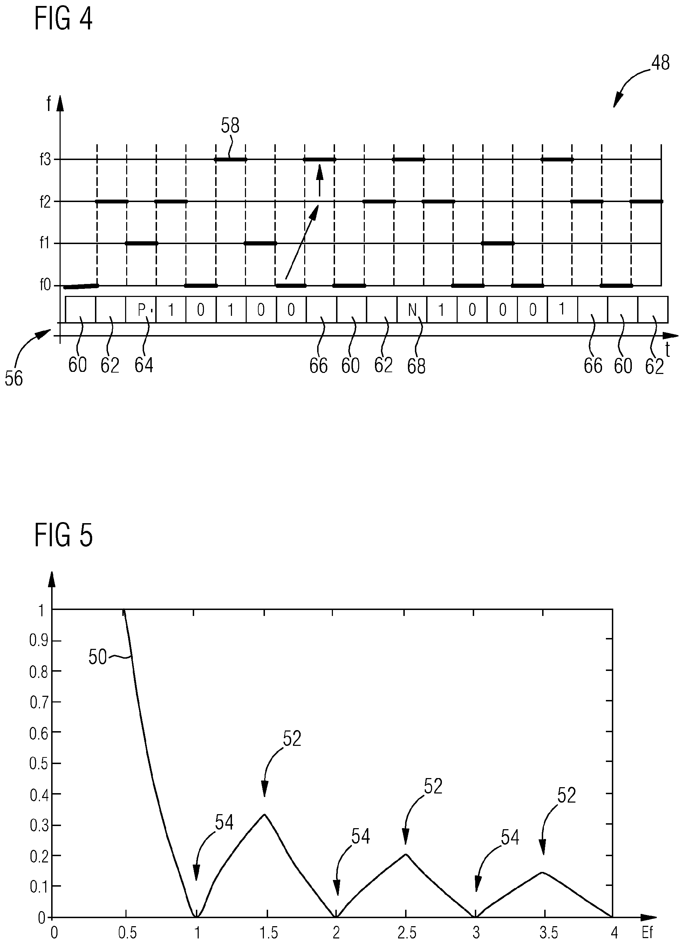

FIG 1 zeigt in einer schematischen Blockdarstellung ein System 10 zum Übermitteln von Daten 56 (FIG 4) eines Netzteils 12 als Funktionsgerät des Systems 10 mittels eines Lichtsignals an ein Smartphone 14 als mobiles Auswertegerät des Systems 10. Das Netzteil 12 ist ausgebildet, ein Steuersignal für eine Signalleuchte 16 des Netzteils 12 bereitzustellen. Die Signalleuchte 16 ist vorliegend durch eine Leuchtdiode gebildet, die über eine Steuerleitung 18 mit einem Steuermodul 30 des Netzteils 12 elektrisch verbunden ist. Das Steuermodul 30 kann einen oder mehrere Betriebszustände des Netzteils 12 bestimmen oder vorgeben und gibt abhängig vom jeweils aktuellen Betriebszustand ein entsprechendes Steuersignal auf die Steuerleitung 18, um den jeweiligen Betriebszustand des Netzteils 12 abhängig vom Steuersignal durch Abgeben von sichtbarem Licht 20 visuell erfassbar zu signalisieren. In der vorliegenden Ausgestaltung ist vorgesehen, dass der Betriebszustand durch einen Aktivzustand bestimmt ist, indem das Netzteil 12 in bestimmungsgemäßer Weise eine elektrische Energieversorgung für ein weiteres, nicht dargestelltes Gerät bereitstellt. Das Licht 20 ist von einem nicht dargestellten Nutzer mittels seines Auges visuell erfassbar, sodass er unmittelbar erkennen kann, dass das Netzteil 12 im aktivierten Betriebszustand ist, um die gewünschte Energieversorgung bereitzustellen.

Das Netzteil 12 ist vorliegend Bestandteil einer nicht weiter dargestellten Anlagensteuerung einer Fertigungsanlage. Insbesondere für die Überwachung beziehungsweise Wartung der Anlage ist es wünschenswert, wenn weitere Daten des Netzteils 12 verfügbar sind, beispielsweise eine aktuelle elektrische Leistung des Netzteils 12, ein aktueller Strom, eine aktuelle Spannung, Daten in Bezug auf Schutzfunktionen, mit der eine Überlastung des Netzteils 12 begrenzt oder vermieden werden kann, eine Temperatur und/oder dergleichen. Im Stand der Technik ist es hierfür üblich, das Netzteil 12 mit einem Kommunikationsnetzwerk zu verbinden, sodass die gewünschten Daten über das Kommunikationsnetzwerk abgefragt werden können. Zu diesem Zweck ist es im Stand der Technik üblich, eine entsprechende zusätzliche Hardware und eine entsprechende zusätzliche Software im Netzteil 12 vorzusehen, mittels welchen die gewünschte Funktionalität erreicht werden kann. Dies ist jedoch aufwändig und teuer und insbesondere bei Anlagen, die eine Vielzahl von beispielsweise kleineren Funktionsgeräten aufweisen, ineffizient.

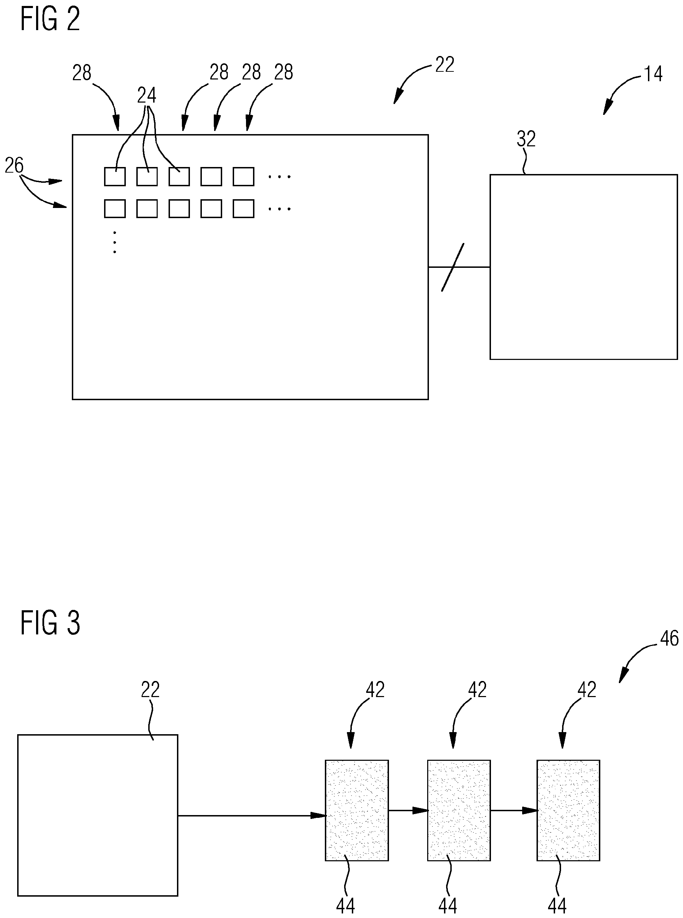

Um diesen Nachteil zu reduzieren, kann das von der Signalleuchte 16 abgegebene Licht 20 ergänzend genutzt werden, um die Daten 56 an das Smartphone 14 zu übertragen. Auf diese Weise braucht keine separate Hardware im Netzteil 12 mehr vorgesehen zu sein. Vielmehr kann das Steuersignal entsprechend den zu übermittelnden Daten 56 gemäß einem vorgegebenen Modulationsverfahren 48 moduliert werden, um das Lichtsignal zusammen mit dem den Betriebszustand signalisierenden Licht 20 durch die Signalleuchte 16 abzugeben. Dieses abgegebene Licht 20 kann mittels des Smartphones 14, und zwar dessen Kamera 22 erfasst werden. Dabei kann berücksichtigt werden, dass die Kamera 22 in der Regel als Digitalkamera in Form einer pixelbasierten digitalen Lichterfassungseinheit ausgebildet ist, die Lichtsensorelemente 24 aufweist, die in Zeilen 26 und Spalten 28 angeordnet sind, sowie dies anhand von FIG 2 ersichtlich ist.

Das Smartphone 14 weist eine Steuereinheit 32 auf, die unter anderem eine nicht weiter dargestellte programmgesteuerte Rechnereinheit umfasst. Die Steuereinheit 32 ist mit der Kamera 22 kommunikationstechnisch gekoppelt und ausgebildet, von den Lichtsensorelementen 24 erfasste Lichtwerte zeilenweise aufeinanderfolgend oder auch spaltenweise aufeinanderfolgend auszulesen. Sind alle Zeilen 26 beziehungsweise Spalten 28 aufeinanderfolgend ausgelesen, kann dieser Vorgang zyklisch wiederholt werden, sodass die erfassten Lichtwerte in Form eines Videodatenstroms 46 von Bildern 42 mit Bilddaten 44 bereitgestellt werden, die unter anderem die übermittelten Daten 56 enthalten. Die Steuereinheit 32 wertet die erfassten Lichtwerte aus und bestimmt die übermitteln Daten 56.

Das System 10 ist dabei derart ausgelegt, dass die von den Lichtsensorelementen 24 erfassten Lichtwerte entlang einer jeweiligen Zeile 26 oder Spalte 28 der Lichterfassungseinheit 24 innerhalb eines jeweiligen Auslesezeitraums ausgelesen werden, der kleiner als eine halbe Periodendauer der größten in dem vorgegebenen Modulationsverfahren 48 genutzten Modulationsfrequenzen f0, f1, f2, f3 ist. Dies ist anhand von FIG 4 weiter erläutert.

In der vorliegenden Ausgestaltung ist vorgesehen, dass das Netzteil 12 ausgebildet ist, in dem vorgegebenen Modulationsverfahren 48 die Modulationsfrequenzen f0, f1, f2, f3 des Modulationsverfahrens 48 im Rahmen eines Frequenzumtastverfahrens (englisch: frequency shift keying; FSK) zu verwenden, die einerseits größer als 1,2 kHz sind und andererseits kleiner als 5 kHz sind. Es handelt sich also vorliegend um ein 4-FSK-Modulationsverfahren. Diese Auswahl ermöglicht es, dass einerseits die von dem vorgegebenen Modulationsverfahren 48 genutzten Modulationsfrequenzen f0, f1, f2, f3 größer als 1,2 kHz sind, sodass ein Nutzer mit seinem Auge Lichtschwankungen im Wesentlichen nicht zu erkennen vermag. Das hat den Vorteil, dass aus Nutzersicht die Signalleuchte 16 weiterhin kontinuierlich leuchtet, wenn der jeweilige Betriebszustand angezeigt wird, und unter anderem ein Flackern aufgrund der Modulation vermieden werden kann. Die visuelle Signalisierungsfunktion der Signalleuchte 16 kann dadurch im Wesentlichen ungestört aufrechterhalten werden.

Zugleich ermöglicht es die Erfindung, mit dem Licht 20 trotzdem die Lichtsignale abzugeben, mit denen die Daten 56 übertragen werden können. Zu diesem Zweck ist vorgesehen, dass die Modulationsfrequenzen kleiner als 5 kHz sind. Dabei wird berücksichtigt, dass es sich bei der Kamera 22 um eine Kamera handelt, die als pixelbasierte digitale Kamera ausgebildet ist und bei der die Lichtsensorelemente 24 in den Zeilen 26 und den Spalten 28 angeordnet sind. Je nach Konstruktion des Smartphones 14 kann vorgesehen sein, dass die Zeilen 26 entweder zyklisch zeilenweise aufeinanderfolgend oder zyklisch spaltenweise aufeinanderfolgend ausgelesen werden. Für die Funktion der Erfindung ist dies jedoch nicht relevant. Unter Nutzung des Rolling-Shutter-Effekts, der aufgrund dieser Signalverarbeitung der Kamera 22 im Smartphone 14 genutzt wird, ist es möglich, aus den Lichtsignalen die Daten 56 zu bestimmen.

Wie aus FIG 1 ferner ersichtlich ist, weist das Steuermodul 30 einen Frequenzumtastmodulator 34 auf, der die Daten 56 aus einem Datenspeicher 36 des Steuermoduls 30 empfängt und entsprechend dem vorgegebenen Modulationsverfahren 48 auf das Steuersignal aufmoduliert, sodass das modulierte Steuersignal über die Steuerleitung 18 an die Signalleuchte 16 abgegeben wird.

An die Steuereinheit 32 ist ferner an einen Frequenzumtastdemodulator 38 angeschlossen, mittels dem eine Demodulation des erfassten Lichtsignals realisiert werden kann. Der Frequenzumtastdemodulator 38 liefert die auf diese Weise bestimmten Daten 56 an die Verarbeitungseinheit 40 des Smartphones 14, sodass diese bedarfsgerecht weiterverarbeitet werden können. Die Weiterverarbeitung kann zum Beispiel darin bestehen, dass die Daten 56 an eine entfernte Zentrale über ein Mobilfunknetz übermittelt werden. Es kann auch vorgesehen sein, dass die Daten 56 auswählbar auf einem Bildschirm des Smartphones 14 visuell dargestellt werden.

FIG 2 zeigt in einer schematischen Blockdiagramm die Kamera 22 mit den Lichtsensorelementen 24, die in den Zeilen 26 und den Spalten 28 angeordnet sind. Über eine entsprechende nicht dargestellte elektrische Matrixverschaltung sind die Lichtsensorelemente 24 mit der Steuereinheit 32 des Smartphones 14 elektrisch verbunden. Die Steuereinheit 32 ist ausgebildet, das entsprechende Auslesen der Lichtwerte zu realisieren. Die Steuereinheit 32 weist eine nicht dargestellte programmgesteuerte Rechnereinheit auf.

FIG 3 zeigt in einer schematischen Signaldarstellung den von der Kamera 22 bereitgestellten Videodatenstrom 46. Aus FIG 3 ist ersichtlich, dass der Videodatenstrom 46 aufeinanderfolgende Bilder 42 umfasst, wobei jedes Bild 42 entsprechende Bilddaten 44 enthält. Die Bilddaten 44 entsprechen den jeweiligen durch die Lichtsensorelemente 24 erfassten Lichtwerten. So kann beispielsweise einem jeweiligen Pixel des Bilds 42 ein entsprechender Lichtwert eines jeweiligen Lichtsensorelements 24 zugeordnet werden. In der vorliegenden Ausgestaltung ist vorgesehen, dass die Lichtwerte als digitale Bilddaten 44 vorliegen.

In der vorliegenden Ausgestaltung ist vorgesehen, dass als Modulationsverfahren 48 ein Frequenzumtastverfahren genutzt wird. FIG 4 zeigt eine schematische Signaldarstellung für ein in der vorliegenden Ausgestaltung genutztes Modulationsverfahren, welches ein 4-FSK-Modulationsverfahren ist und zum Übermitteln der Daten 56 durch das System 10 gemäß FIG 1 dient. Wie aus FIG 4 ersichtlich ist, nutzt das Frequenzumtastverfahren die Modulationsfrequenzen f0, f1, f2, f3, die vorliegend jeweils in einem ganzzahligen Verhältnis zueinander stehen. Darüber hinaus ist aus FIG 4 ersichtlich, dass einem jeweiligen Bit der Daten 56 mittels des vorgegebenen Modulationsverfahrens 48 jeweils zwei voneinander unterschiedliche Modulationsfrequenzen f0, f1, f2, f3 zugeordnet werden, die dem Übermitteln des jeweiligen Bits dienen. Ein Graph 58 kennzeichnet einen Frequenzverlauf, den er durch eine Datenfolge gemäß den in FIG 4 dargestellten Daten 56 zur Folge hat. Wie anhand des Graphen 58 ersichtlich ist, werden dem Datenstrom 56 im Rahmen des Modulationsverfahrens 48 ergänzend Bits hinzugefügt, und zwar ein Initialisierungsbit 60, ein Startbit 62, ein Bit 64 zum Anzeigen einer positiven Logik, ein Stoppbit 66 und ein Bit 68 zum Anzeigen einer negativen Logik. Der auf diese Weise vorbereitet Datenfolge werden dann im Rahmen des Modulationsverfahrens 48 die entsprechenden Modulationsfrequenzen f0, f1, f2, f3 gemäß dem Graphen 58 zugeordnet. Dieses Signal wird dann dem Steuersignal auf der Steuerleitung 18 überlagert, sodass es durch die Signalleuchte 16 mit dem Licht 20 als Lichtsignal abgegeben werden kann.

Wie aus FIG 4 ersichtlich ist, beginnt der Datenstrom mit einem Initialisierungsbit 60, dem ein Startbit 62 folgt. Dem Initialisierungsbit 60 ist vorliegend immer die Modulationsfrequenz f0 zugeordnet. Dem Initialisierungsbit 60 folgt ein Startbit 62, dem vorliegend immer die Modulationsfrequenz f2 zugeordnet ist. Dadurch ist es einem Empfänger, hier dem Smartphone 14, möglich, den Beginn einer Datenfolge zu erkennen. Als Nächstes folgt im vorliegenden Datenstrom die Übermittlung des Bits 64 für die Anzeige der positiven Logik, in dem die Modulationsfrequenz f1 übermittelt. Daran schließt sich die Übermittlung von Datenbits 10100 an, wobei jeweilige Modulationsfrequenzen übermittelt werden, wie sie anhand des Graphen 58 ersichtlich sind. Damit beim Übermitteln des letzten Bits, welches durch die Modulationsfrequenz f0 übermittelt wird, nicht ein Signalanfang übermittelt wird, wird im Folgenden als Stoppbit 66 die Modulationsfrequenz f3 übermittelt.

Daran schließt sich die erneute Übermittlung des Initialisierungsbits 60 und des Startbits 62 an, sodass empfängerseitig, das heißt, seitens des Smartphones 14, ersichtlich ist, dass jetzt eine neue Datenfolge folgt. Nach den Startbit 62 wird nun das Bit 68 für die negative Logik zunächst übermittelt, indem die Modulationsfrequenz f3 übertragen wird. Daran schließt sich die Übermittlung einer Datenfolge 10001 an, zu welchem Zweck die Modulationsfrequenzen gemäß dem Graphen 58 übermittelt werden. Schließlich endet diese Übermittlung mit dem Stoppbit 66, dem in diesem Fall die Modulationsfrequenz f2 zugeordnet ist. Daran schließt sich eine erneute Übermittlung des Initialisierungsbits 60 und des Startbits 62 an, so wie dies bereits zuvor erläutert wurde, woraufhin eine weitere Bitfolge übermittelt werden kann, die jedoch in FIG 4 nicht mehr dargestellt ist.

Wie aus FIG 4 ersichtlich ist, wechselt das Modulationsverfahren 48 an einem Übergang von zwei aufeinanderfolgenden Bits der Daten 56 die Modulationsfrequenz von einer ersten Modulationsfrequenz zu einer zweiten Modulationsfrequenz. Dadurch ist es empfängerseitig gut erkennbar, dass ein neues Bit gesendet wird.

FIG 5 zeigt eine schematische Diagrammdarstellung einer Übermittlungscharakteristik, welches insbesondere Eigenschaften der Kamera 22 des Smartphones 14 gemäß FIG 2 berücksichtigt. In FIG 5 ist eine Abszisse einem Produkt aus einer Belichtungszeit mit einer Frequenz zugeordnet und eine Ordinate einer normierten Amplitude von erfasstem Licht 20 durch die Kamera 22 zugeordnet. Mit einem Graphen 50 ist ein entsprechender Verlauf einer sich hieraus ergebenden Übermittlungscharakteristik dargestellt. Wie aus FIG 5 ersichtlich ist, liegen bei den Werte 1, 2, 3, 4 jeweilige lokale Minima 54 vor. Dagegen liegen bei den Werten 0,5, 1,5, 2,5 und 3,5 jeweilige lokale Maxima 52 vor. In der vorliegenden Ausgestaltung ist vorgesehen, dass die Modulationsfrequenzen f0, f1, f2, f3 in den Bereichen der jeweiligen lokalen Maxima 52 gewählt sind. Dadurch kann eine besonders günstige Signalübertragung mit hoher Zuverlässigkeit und Störfestigkeit erreicht werden. Dies ermöglicht es ferner, dass die Modulationsfrequenzen f0, f1, f2, f3 durch die Bereiche der lokalen Minima 54 der Übermittlungscharakteristik voneinander beabstandet sind.

In einer alternativen Ausgestaltung kann vorgesehen sein, dass jedem Bit der Daten 56 mittels des vorgegebenen Modulationsverfahrens 48 zwei voneinander unterschiedliche Modulationsfrequenzen f0, f1, f2, f3 zugeordnet werden, die dem Übermitteln des jeweiligen Bits dienen. Das heißt, bei dieser Ausgestaltung ändert sich die Modulationsfrequenz f0, f1, f2, f3 während der Übertragung eines jeweiligen Bits.

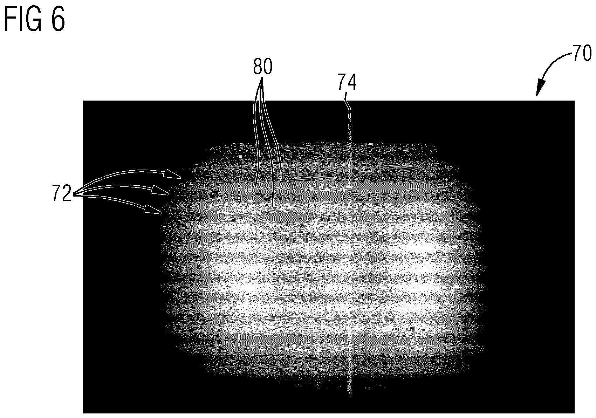

Für eine Inbetriebnahme des Systems 10 ist eine folgende Ausgestaltung vorgesehen. Das Steuermodul 30 des Netzteils 12 wird so programmiert, dass es die Daten 56 als Lichtsignale gemäß dem zuvor erläuterten anhand von FIG 4 erläuterten Verfahren über die Signalleuchte 16 abgibt. Mit der Digitalkamera 22 des Smartphones 14 wird das die Lichtsignale enthaltende Licht 20 erfasst. Es ergibt sich durch das zeilenweise Auslesen der Lichtwerte 80 aus der Digitalkamera 22 ein Bild 70. FIG 6 zeigt eine schematische Darstellung des Bildes 70. Wie aus FIG 6 ersichtlich ist, enthält das Bild 70 vorliegend waagerechte Streifen beziehungsweise Zeilen 72 unterschiedlicher Helligkeit. Senkrecht zu den Zeilen 72 ergibt sich folglich eine Helligkeitschwingung.

Mit dem Auslesen kann ein Bilddatensatz des Bildes 70 mit einer den Lichtsensorelementen 24 entsprechenden Anzahl an Bildpixeln gebildet werden. Die erfassten Lichtwerte 80 der Lichtsensorelemente 24 aller Zeilen 72 werden in einem Auslesezyklus genau einmal ausgelesen. Dabei werden jedem Bildpixel Lichtwertdaten von jeweils genau einem jeweiligen Lichtsensorelement 24 zugeordnet.

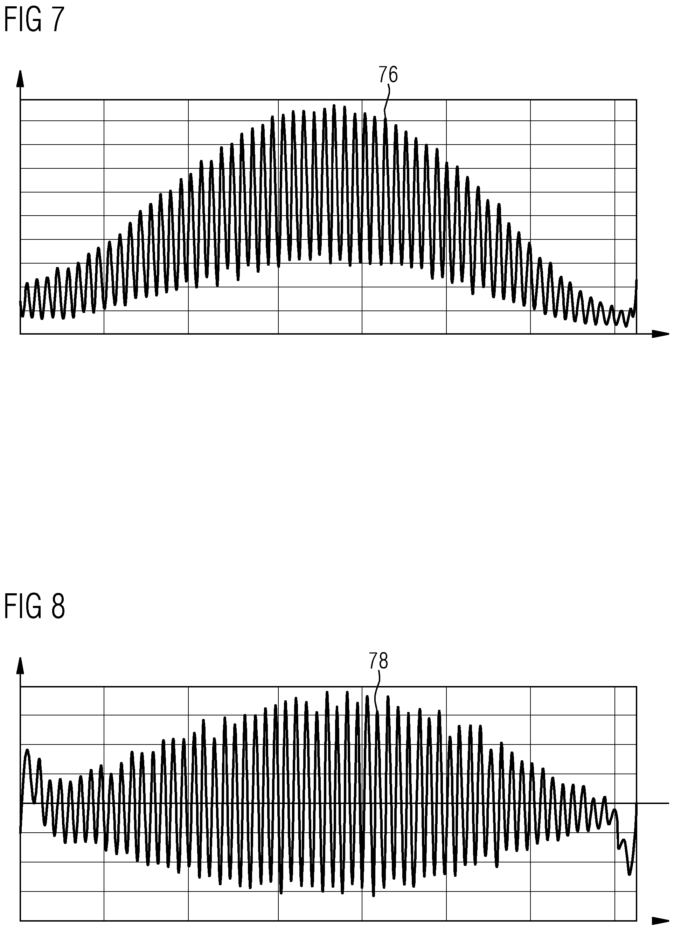

Sodann wird eine Auswertespalte 74 bestimmt, die quer zu den Zeilen 72 angeordnet ist. Die Auswertespalte 74 erfasst jeweils ein Lichtsensorelement 24 aller Zeilen 72. FIG 7 zeigt eine schematische Diagrammdarstellung von durch eine Auslesespalte 74 erfassten Lichtwerten 80 des Bildes 70gemäß FIG 6. In der Diagrammdarstellung gemäß FIG 7 ist eine Abszisse den Lichtsensorelementen 24 der Auswertespalte 74 zugeordnet, wohingegen eine Ordinate einer Helligkeit zugeordnet ist. Ein Graph 76 zeigt die Helligkeitschwingung.

Anhand der Lichtwertdaten der durch die Auswertespalte 74 erfassten Lichtsensorelemente 24 kann ein Mittelwert als Referenzwert bestimmt werden. In einem weiteren Verarbeitungsschritt wird der Referenzwert von den Lichtwertdaten subtrahiert. Dadurch wird eine schematische Diagrammdarstellung gemäß FIG 8 erreicht, bei der die Lichtwertdaten gemäß FIG 7 um einen Referenzwert korrigiert sind. Es wird somit eine normalisierte Schwingung ermittelt, wie sie in FIG 8 mit einem Graphen 78 dargestellt ist. Anand dieser Schwingung kann dann eine zugehörige Modulationsfrequenz f0, f1, f2, f3 ermittelt werden. Die Verfahrensführung kann wiederholt werden, um weitere Modulationsfrequenzen f0, f1, f2, f3 zu ermitteln, vorzugsweise um sämtliche Modulationsfrequenzen f0, f1, f2, f3 zu ermitteln.

In diesem Zusammenhang kann es sich als vorteilhaft erweisen, dass die Art der Logik zwischen positiver Logik und negativer Logik gewechselt wird. Würden die Daten 56 eine längere Folge von Nullen oder Einsen aufweisen, könnten unter Umständen nicht alle Modulationsfrequenzen f0, f1, f2, f3 ermittelt werden. Der Wechsel der Logik kann dieses Problem reduzieren oder beheben.

Die normalisierte Schwingung kann ferner mit einem vorgegebenen Lichtvergleichswert verglichen werden. Der Lichtvergleichswert ist derart gewählt, dass eine Amplitude der normalisierten Schwingung von einem Rauschen zuverlässig unterschieden werden kann. Ist eine Amplitude kleiner als der Lichtvergleichswert, braucht keine weitere Signalverarbeitung vorgesehen zu sein. Vorzugsweise werden daher nur solche normalisierten Schwingungen zum Ermitteln der Modulationsfrequenzen f0, f1, f2, f3 weiterverarbeitet, deren Amplituden zumindest teilweise größer als der Lichtvergleichswert sind.

Zeigt sich, dass nicht alle Modulationsfrequenzen f0, f1, f2, f3 ermittelt werden können, kann das Smartphone 14 ein entsprechendes Signal ausgeben. Dadurch kann der Nutzer das System 10 anpassen, indem zum Beispiel ein Frequenzbereich für die Modulationsfrequenzen f0, f1, f2, f3 auf einen kleineren Bereich einschränkt, sodass alle Modulationsfrequenzen f0, f1, f2, f3 ermittelt werden können.

Erfolgt in einem weiteren Ausführungsbeispiel das Auslesen spaltenweise, ist die Verfahrensführung entsprechend angepasst.

Die Ausführungsbeispiele dienen ausschließlich der Erläuterung der Erfindung und sollen diese nicht beschränken.

### Bezugszeichenliste

- 10: System
- 12: Netzteil
- 14: Smartphone
- 16: Signalleuchte
- 18: Steuerleitung
- 20: Licht
- 22: Digitalkamera
- 24: Lichtsensorelemente
- 26: Zeile
- 28: Spalte
- 30: Steuermodul
- 32: Steuereinheit
- 34: Frequenzumtastmodulator
- 36: Datenspeicher
- 38: Frequenzumtastdemodulator
- 40: Verarbeitungseinheit
- 42: Bild
- 44: Bilddaten
- 46: Videodatenstrom
- 48: Modulationsverfahren
- 50: Graph
- 52: lokales Maximum
- 54: lokales Minimum
- 56: Daten
- 58: Graph
- 60: Initialisierungsbit
- 62: Startbit
- 64: positive Logik
- 66: Stoppbit
- 68: negative Logik
- 70: Bild
- 72: Zeilen
- 74: Auswertespalte
- 76: Graph
- 78: Graph
- 80: Lichtwert
- f0: Modulationsfrequenz
- f1: Modulationsfrequenz
- f2: Modulationsfrequenz
- f3: Modulationsfrequenz

## Patentansprüche

1. Verfahren zum Übermitteln von Daten (56) eines Funktionsgeräts (12) mittels eines Lichtsignals an ein mobiles Auswertegerät (14), wobei das Funktionsgerät (12) ein Steuersignal für eine Signalleuchte (16) des Funktionsgeräts (12) bereitstellt, wobei ein Betriebszustand des Funktionsgeräts (12) abhängig vom Steuersignal durch Abgeben von sichtbarem Licht (20) visuell erfassbar signalisiert wird, wobei das Steuersignal entsprechend den zu übermittelnden Daten (56) gemäß einem vorgegebenen Modulationsverfahren (48) moduliert wird, sodass das Lichtsignal zusammen mit dem den Betriebszustand signalisierenden Licht (20) durch die Signalleuchte (16) abgegeben wird, wobei das von der Signalleuchte (16) abgegebene Licht (20) von einer pixelbasierten digitalen Lichterfassungseinheit (22) des Auswertegeräts (14) erfasst wird, wobei die Lichterfassungseinheit (22) Lichtsensorelemente (24) aufweist, die in Zeilen (26) und Spalten (28) angeordnet sind, wobei erfasste Lichtwerte (80) der Lichtsensorelemente (24) zeilenweise aufeinanderfolgend oder spaltenweise aufeinanderfolgend ausgelesen werden, wobei von den Lichtsensorelementen (24) erfasste Lichtwerte (80) vom Auswertegerät (14) ausgewertet werden, um die übermittelten Daten (56) zu bestimmen,
**dadurch gekennzeichnet, dass**
als vorgegebenes Modulationsverfahren (48) ein Frequenzumtastverfahren mit mehreren Modulationsfrequenzen (f0, f1, f2, f3) genutzt wird, wobei die erfassten Lichtwerte (80) der Lichtsensorelemente (24) aller Zeilen (26) beziehungsweise aller Spalten (28) in wenigstens einem Auslesezyklus genau einmal ausgelesen werden, um einen Bilddatensatz mit einer den Lichtsensorelementen (24) entsprechenden Anzahl an Bildpixeln zu bilden, wobei jedem Bildpixel Lichtwertdaten von jeweils genau einem jeweiligen Lichtsensorelement (24) zugeordnet werden, wobei bei den zeilenweise ausgelesenen Lichtwerten (80) Lichtwertdaten zu den Lichtwerten (80) von wenigstens einer Spalte als Auswertespalte (74) durch das Auswertegerät (14) ausgewertet werden, um wenigstens eine der Modulationsfrequenzen (f0, f1, f2, f3) zu ermitteln, oder wobei bei den spaltenweise ausgelesenen Lichtwerten (80) Lichtwertdaten zu den Lichtwerten (80) von wenigstens einer Zeile als Auswertezeile durch das Auswertegerät (14) ausgewertet werden, um wenigstens eine der Modulationsfrequenzen (f0, f1, f2, f3) zu ermitteln.

2. Verfahren nach Anspruch 1, **dadurch gekennzeichnet, dass** alle Modulationsfrequenzen (f0, f1, f2, f3) ermittelt werden.

3. Verfahren nach einem der vorhergehenden Ansprüche, **dadurch gekennzeichnet, dass** ein Frequenzumtastdemodulator (38) des Auswertegeräts (14) abhängig von der wenigstens einen ermittelten Modulationsfrequenz (f0, f1, f2, f3) eingestellt wird.

4. Verfahren nach einem der vorhergehenden Ansprüche, **dadurch gekennzeichnet, dass** zumindest abhängig von den in der Auswertespalte (74) beziehungsweise der Auswertezeile enthaltenen Lichtwertdaten eine jeweilige Helligkeitsschwingung und ein Referenzwert ermittelt wird, wobei zum Ermitteln der jeweiligen Modulationsfrequenz (f0, f1, f2, f3) der Referenzwert von der ermittelten Helligkeitsschwingung subtrahiert wird, um eine normalisierte Schwingung zu erhalten.

5. Verfahren nach Anspruch 4, **dadurch gekennzeichnet, dass** die normalisierte Schwingung mit einem vorgegebenen Lichtvergleichswert verglichen wird.

6. Verfahren nach Anspruch 5, **dadurch gekennzeichnet, dass** abhängig von dem Vergleichen eine Funktionsbereitschaft durch das Auswertegerät (14) signalisiert wird.

7. Verfahren nach einem der vorhergehenden Ansprüche, **dadurch gekennzeichnet, dass** ein Teil der Daten (56) zum Modulieren in positiver Logik vom Funktionsgerät (12) bereitgestellt wird.

8. Verfahren nach einem der vorhergehenden Ansprüche, **dadurch gekennzeichnet, dass** ein Teil der Daten (56) zum Modulieren in negativer Logik vom Funktionsgerät (12) bereitgestellt wird.

9. Verfahren nach einem der vorhergehenden Ansprüche, **dadurch gekennzeichnet, dass** aufeinanderfolgende Datenabschnitte der Daten (56) vom Funktionsgerät (12) wechselweise in positiver und negativer Logik bereitgestellt werden.

10. Verfahren nach Anspruch 9, **dadurch gekennzeichnet, dass** das Funktionsgerät zumindest bei einem Wechsel zwischen einem Datenabschnitt in positiver Logik und einem anschließenden Datenabschnitt in negativer Logik oder einem Wechsel zwischen einem Datenabschnitt in negativer Logik und einem anschließenden Datenabschnitt in positiver Logik eine Wechselbitfolge (60, 62, 66) zwischen den jeweiligen Datenabschnitten einfügt.

11. Verfahren nach Anspruch 10, **dadurch gekennzeichnet, dass** die Wechselbitfolge wenigstens ein Initialisierungsbit (60) aufweist.

12. System (10) zum Übermitteln von Daten (56) eines Funktionsgeräts (12) des Systems (10) mittels eines Lichtsignals an ein mobiles Auswertegerät (14) des Systems (10), wobei das Funktionsgerät (12) ausgebildet ist, ein Steuersignal für eine Signalleuchte (16) des Funktionsgeräts (12) bereitzustellen, um einen Betriebszustand des Funktionsgeräts (12) abhängig vom Steuersignal durch Abgeben von sichtbarem Licht (20) visuell erfassbar zu signalisieren, wobei das Funktionsgerät (12) ferner ausgebildet ist, das Steuersignal entsprechend den zu übermittelnden Daten (56) gemäß einem vorgegebenen Modulationsverfahren (48) zu modulieren, um das Lichtsignal zusammen mit dem den Betriebszustand signalisierenden Licht (20) durch die Signalleuchte (16) abzugeben, wobei das Auswertegerät (14) eine pixelbasierte digitale Lichterfassungseinheit (22) zum Erfassen des von der Signalleuchte (16) abgegebenen Lichts (20) aufweist, wobei die Lichterfassungseinheit (22) Lichtsensorelemente (24) aufweist, die in Zeilen (26) und Spalten (28) angeordnet sind, wobei das Auswertegerät (14) ausgebildet ist, von den Lichtsensorelementen (24) erfasste Lichtwerte (80) zeilenweise aufeinanderfolgend oder spaltenweise aufeinanderfolgend auszulesen und die von den Lichtsensorelementen (24) erfassten Lichtwerte (80) auszuwerten, um die übermittelten Daten (56) zu bestimmen,
**dadurch gekennzeichnet, dass**
das Funktionsgerät (12) einen Frequenzumtastmodulator (34) und das Auswertegerät (14) einen Frequenzumtastdemodulator (38) aufweist, die ausgebildet sind, als vorgegebenes Modulationsverfahren (48) ein Frequenzumtastverfahren mit mehreren Modulationsfrequenzen (f0, f1, f2, f3) zu nutzen, wobei das Auswertegerät (14) ferner ausgebildet ist, die erfassten Lichtwerte (80) der Lichtsensorelemente (24) aller Zeilen (26) beziehungsweise aller Spalten (28) in wenigstens einem Auslesezyklus genau einmal auszulesen, um einen Bilddatensatz mit einer den Lichtsensorelementen (24) entsprechenden Anzahl an Bildpixeln zu bilden, wobei das Auswertegerät (14) ausgebildet ist, jedem Bildpixel Lichtwertdaten von jeweils genau einem jeweiligen Lichtsensorelement (24) zuzuordnen, wobei das Auswertegerät (14) ausgebildet ist, bei den zeilenweise ausgelesenen Lichtwerten (80) Lichtwertdaten zu den Lichtwerten (80) von wenigstens einer Spalte als Auswertespalte (74) durch das Auswertegerät (14) auszuwerten, um wenigstens eine der Modulationsfrequenzen (f0, f1, f2, f3) zu ermitteln, oder bei den spaltenweise ausgelesenen Lichtwerten (80) Lichtwertdaten zu den Lichtwerten (80) von wenigstens einer Zeile als Auswertezeile durch das Auswertegerät (14) auszuwerten, um wenigstens eine der Modulationsfrequenzen (f0, f1, f2, f3) zu ermitteln.

13. Funktionsgerät (12) des Systems (10) nach Anspruch 12.

14. Auswertegerät (14) des Systems (10) nach Anspruch 12.

15. Auswertegerät nach Anspruch 14, **gekennzeichnet durch** ein Smartphone oder ein Tablet, das eine Kamera als Lichterfassungseinheit (22) aufweist, die die erfassten Lichtwerte in Form eines Videodatenstroms (46) von Bildern (42) mit Bilddaten (44) bereitstellt, wobei auf dem Smartphone (14) eine Anwendung installiert ist, die die von der Kamera (22) bereitgestellten Bilddaten (44) auswertet, um die übermittelten Daten (56) zu bestimmen.
